# EUROPÄISCHE PATENTANMELDUNG

(11) **EP 1 270 689 A1**
(43) Veröffentlichungstag der Anmeldung: **02.01.2003**
(21) Anmeldenummer: 02011549.9
(22) Anmeldetag: 24.05.2002
(51) Int. Cl.: C09D 5/02, C09D 5/36

(54) **Effektpigmenthaltige wässrige Pulverlackdispersionen**

(30) Priorität: 19.06.2001 DE 10129506
(71) Anmelder: MERCK PATENT GmbH, 64293 Darmstadt (DE)
(72) Erfinder: Kieser, Manfred, Dr., 64291 Darmstadt (DE); Hennemann, Alfred, 64753 Brombachtal (DE)

(57) **Zusammenfassung**

Die vorliegende Erfindung betrifft wäßrige Pulverlackdispersionen, die 5 bis 60 Gew.-% Pulverlack, 0,2 bis 10 Gew.-% Effektpigment und gegebenenfalls weitere Lackhilfsstoffe enthalten. Die Erfindung betrifft darüber hinaus die Herstellung der wäßrigen Pulverlackdispersionen und deren Verwendung.

## Beschreibung

Die vorliegende Erfindung betrifft wäßrige Pulverlackdispersionen, die Effektpigmente, insbesondere plättchenförmige Effektpigmente, wie zum Beispiel Glanzpigmente enthalten. Des weiteren betrifft die vorliegende Erfindung die Herstellung und Verwendung derartiger Dispersionen.

Beim Einsatz von Effektpigmenten in Pulverlacken, insbesondere beim Einsatz von plättchenförmigen Effektpigmenten in Pulverlacken, treten im wesentlichen zwei Probleme auf, die vom Zumischungszeitpunkt des Pigments zum Pulverlack abhängen.

So können die Glanzpigmente grundsätzlich entweder vor oder nach Extrusions- und Mahlprozessen dem Pulverlack zugegeben werden. Erfolgt eine Effektpigmentzugabe vor einem Extrusions- und Mahlschritt, so kann dies je nach Pigmentbeschaffenheit im schlimmsten Fall zu einer völligen Zerstörung des Pigmentaufbaus und somit der erwünschten Pigmenteigenschaften führen. Besonders deutlich wird dies, wenn alle Pulverlackkomponenten und ein plättchenförmiges Effektpigment (Glanzpigment) gemeinsam extrudiert und gemahlen werden, da das Pigment im fertigen Lackpulver so stark geschädigt ist, dass zum Beispiel der optische Glanzeffekt praktisch vollständig verloren geht.

Bei der nachträglichen Zugabe (Dryblending) von Effektpigmenten, insbesondere Metalleffekt- oder Perlglanzpigmenten ist jedoch - abhängig von Pulverlack und Pigment - eine An- oder Abreicherung von Effektpigmenten auf dem zu lackierenden Objekt zu beobachten. Ursache hierfür ist u. a. das unterschiedliche Aufladeverhalten der Pulverlack- und Pigmentteilchen. Die optischen Eigenschaften (z.B. Glanz, Farbe und Deckvermögen) von mit Frischmaterial lackierten Objekten unterscheiden sich daher sehr deutlich von denen, die mit wieder eingesetztem Overspray-Material lackiert wurden. Die Wiederverwendung von Overspray wird aber auch in Verbindung mit viel Originalmaterial gelegentlich problematisch.

Um das Entmischungsproblem zu lösen, sind verschiedene Verfahren beschrieben worden. So beruht ein Verfahren auf dem Einbringen von mechanischer und eventuell thermischer Energie in das Effektpigment-Pulverlack-System, wodurch eine mechanische Verbindung von Pulverlack und Effektpigment erreicht wird und eine Entmischung verhindert werden kann.

In der deutschen Offenlegungsschrift DE 24 34 855 wird so zum Beispiel die Herstellung metall-pigmentierter Kunststoffpulver auf einer sehr aufwendigen Anlage beschrieben. Bei diesem Verfahren werden durch einen Bürstprozeß die Pigmentplättchen auf der Oberfläche der Pulverlackteilchen fixiert.

Die deutsche Offenlegungsschrift DE 44 41 638 A1 beschreibt eine wesentlich einfachere Anlage zur Herstellung glanzpigmentierter Pulverlacke, worin besonders gut rieselfähige Pulverlacke für die elektrostatische Applikation erhalten werden.

In DE 44 43 048 wird eine völlig andere Problemlösung hinsichtlich des Vermeidens von Entmischungsvorgängen während der Pulverlackapplikation offenbart und zwar muß der Effektpulverlack gemäß dieser Schrift als wesentlichen Bestandteil 0,1 bis 10 Gew.-% an leitfähigen Pigmenten enthalten, wobei der pigmentierte Pulverlack selbst nicht leitfähig sein darf.

Aus der deutschen Offenlegungsschrift DE 196 18 657 sind wäßrige, nicht pigmentierte Pulverlack-Dispersionen für die Automobillackierung bekannt, die vorzugsweise einer Naßvermahlung unterzogen werden.

Der vorliegenden Erfindung lag die Aufgabe zu Grunde eine gegenüber den Nachteilen des Stands der Technik vorteilhafte Pulverlack-Effektpigment-Mischung bereit zu stellen. Insbesondere sollte die Pulverlack-Effektpigment-Mischung weder die obigen Entmischungsprobleme zeigen, noch die Nachteile von Mischungen besitzen, die Mahl- und Extrusionsprozessen unterzogen wurden. Des weiteren sollte das Herstellungsverfahren stark vereinfacht und das Spektrum der einsetzbaren Pulverlacke und Pigmente vergrößert werden.

Diese Aufgaben konnten überraschenderweise durch Bereitstellung einer wäßrigen Pulverlack-Effektpigment-Dispersion gelöst werden, die 5 bis 60 Gew.-% Pulverlack und 0,2 bis 10 Gew.-% Effektpigment enthält. Bevorzugt ist ein Pulverlackanteil von 10 bis 40 Gew.-% und ein Effektpigmentanteil von 1 bis 8, noch bevorzugter 1,5 bis 6 Gew.-%.

In den erfindungsgemäßen wäßrigen Pulverlackdispersionen können alle üblichen pigmentierten oder unpigmentierten Pulverlackmaterialien eingesetzt werden. Auch Mischungen verschiedener Pulverlacke, mit unterschiedlichen Farben, Oberflächeneffekten oder verschiedenem chemischem Aufbau können verwendet werden. Beispielsweise können Polyester-, Epoxid-Polyester-, Epoxid-, Polyurethan- oder Acrylat-Pulverlacke genannt werden.

Die Teilchengrößen des Pulverlacks können dabei stark variieren und sind nicht auf die herkömmlichen Teilchengrößenbereiche für Pulverlacke (20 bis 150 µm) beschränkt, so sind zum Beispiel ohne weiteres Pulverlackteilchengrößen von 10 bis zu 50 oder weniger möglich, da die Fein-Mahlung des Pulverlacks auch in der wässrigen Phase erfolgen kann.

Die einzige Einschränkung hinsichtlich der Pulverlacke besteht darin, daß diese gegenüber der wäßrigen, homogenen Phase der Dispersion ausreichend stabil sein müssen.

Hinsichtlich der Pigmente bestehen ebenfalls keine Einschränkungen, es sind vielmehr auch Pigmente geeignet, die nicht in herkömmlichen Pulverlacken eingesetzt werden können, wie zum Beispiel solche, die üblicherweise bei zu starker mechanischer Beanspruchung, wie Extrusions- und Mahlschritten zerstört würden. Hierzu zählen insbesondere Effektpimente und ganz besonders plättchenförmige Effektpigmente, wie zum Beispiel Glanzpigmente. Nur beispielhaft seien folgende Pigmentarten, wie Metalleffektpigmente, Perlglanzpigmente, Interferenzpigmente genannt.

Es muß allerdings dafür gesagt werden, daß auch die Pigmente in der wässrigen Pulverlack-Dispersion stabil sind bzw. bleiben.

Um stabile, gut lager- und verarbeitbare Dispersionen aus Pulverlack und Pigment zu erhalten, können die Dispersionen zusätzlich wasserlösliche und/oder wasserdispergierbare Zusätze, d. h. lackübliche Additive, wie z.B. oberflächenaktive Substanzen, Verdickungsmittel, Verlaufsmittel oder sonstige Hilfsmittel enthalten. Derartige Zusätze umfassen z. B. die in DE 196 18 657 und die in den "Lackrohstofftabellen" (10. Auflage, Vincent Verlag) genannten Substanzen. Als oberflächenaktive Substanzen sind zum Beispiel ionische bzw. nichtionische Tenside einsetzbar. Typische Verdickungsmittel sind z. B. Polyacrylate, Polyurethane, Cellulosederivate und anorganische Gelbildner. Als Verlaufsmittel lassen sich beispielsweise Silikone, Acrylate und eine Reihe weiterer Substanzen unterschiedlichen chemischen Aufbaus einsetzen und als sonstige Hilfsstoffe kommen zum Beispiel Antiabsetzmittel, Antistatica, Katalysatoren und Konservierungsmittel in Betracht. Die Auswahl ist jedoch keinesfalls auf obige Aufzählungen beschränkt und die Auswahl und Dosierung ist für den Fachmann je nach Anforderungen an die Applikationsart leicht möglich.

Das erfindungsgemäße Verfahren zur Herstellung wäßriger Pulverlacke umfaßt das Mischen von Wasser, Pulverlack und Pigment sowie gegebenenfalls lacküblichen Additiven, wie sie oben beschrieben sind, in beliebiger Reihenfolge, wobei vorzugsweise die Feinmahlung des Pulverlacks in wäßriger Dispersion vor der Effektpigmentzugabe erfolgt.

Die Verarbeitung der Dispersion, d. h. das Beschichten von Substraten kann durch Spritzen, Streichen, Tauchen, Walzen oder nach anderen für Naßlacke üblichen Verfahren erfolgen. Hierbei ist das Spritzen, entweder mit Luft, "airless" oder elektrostatisch mit den üblichen Einrichtungen bevorzugt. Bei der Anwendung dieser Applikationstechniken muß der Fachmann nur die ihm bekannten und für die jeweilige Applikationstechnik notwendigen anwendungstechnischen Eigenschaften der Pulverlackdispersion beachten.

Die wäßrigen pigmentierten Pulverlackdispersionen können zum Beispiel in der Automobillackierung (Erstlackierung und Reparaturlackierung), aber auch in Industrielacken sowie in vielen Bereichen der allgemeinen Lackierung eingesetzt werden.

Die folgenden Beispiele sollen zur Veranschaulichung der vorliegenden Erfindung dienen, diese jedoch keinesfalls beschränken.

### Herstellungsbeispiele

### Beispiel 1

4 g eines Titandioxid-Glimmer-Perlglanzpigments (Iriodin® 103) und 36 g eines handelsüblichen Pulverklarlacks (Teodur 00013 klar; Fa. Herberts) werden in 58,9 g vollentsalztes Wasser, das mit 0,2 g eines nicht-ionischen Tensids (Polyoxyethylensorbitantrioleat, Tween 85; Fa. Merck; Art. Nr. 8.22188) und 0,9 g Poly(meth)acrylsäuredispersion (Rohagit SD 15; Polymer Latex GmbH) versetzt wurde, eingerührt und homogen verteilt. Nach der Einstellung des pH-Werts, z.B. mit Ammoniak, auf einen pH-Wert von 9 ist die Pulverlackdispersion verarbeitungsfertig. Die Verarbeitung erfolgt durch Airless-Spritzen. Nach dem Trocknen und Einbrennen erhält man einen homogenen Lackfilm, der nach der Analyse den selben Effektpigmentanteil (10 Gew.-%) enthält, wie der trockene "Ausgangspulverlack" (Pigment plus Pulverlack).
Der erzielte visuell wahrnehmbare Glanzeffekt ist sehr gut. Das Effektpigment ist nicht geschädigt.

### Beispiel 2

2 g eines Fe₂O₃-Glimmer-Perlglanzpigments (Iriodin® 504) und 38 g eines handelsüblichen Pulverklarlacks (Teodur 00013 klar; Fa. Herberts) werden in 58,7 g vollentsalztes Wasser, das mit 0,1 g eines nichtionischen Tensids (Polyoxyethylensorbitantrioleat, Tween 85; Fa. Merck; Art. Nr. 8.22188) und 1,2 g eines Polymerverdickers (Collacral VL, BASF AG) versetzt wurde, eingerührt und homogen verteilt. Die Verarbeitung erfolgt durch Airless-Spritzen. Nach dem Trocknen und Einbrennen erhält man einen homogenen Lackfilm, der nach der Analyse den selben Effektpigmentanteil (5 Gew.-%) enthält, wie der trockene "Ausgangspulverlack" (Pigment plus Pulverlack).
Der Glanzeffekt ist ausgezeichnet, da das Pigment ungeschädigt im Lackfilm vorliegt.

### Beispiel 3

1 g eines Titandioxid-Glimmer-Perlglanzpigments (Iriodin® 153) und 39 g eines handelüblichen grauen Pulverlacks (Interpon 200 grau, International Powdercoat) werden in 58,5 g vollentsalztes Wasser, das mit 0,2 g eines nichtionischen Tensids (Polyoxyethylensorbitantrioleat, Tween 85; Fa. Merck; Art. Nr. 8.22188) und 1,3 g einer Polyacrylsäuredispersion (Rohagit SL 606; Röhm GmbH) versetzt wurde, eingerührt und homogen verteilt. Die Verarbeitung erfolgt durch Tauchen. Nach dem Trocknen und Einbrennen erhält man einen homogenen Lackfilm, der nach der Analyse den selben Effektpigmentanteil (2,5 Gew.-%; der Anteil der im grauen Pulverlack enthaltenen Pigmente/Füllstoffe wurde rechnerisch eliminiert) enthält, wie der trockene "Ausgangspulverlack" (Pigment plus Pulverlack).
Der Glanzeffekt ist ausgezeichnet, da das Pigment ungeschädigt im Lackfilm vorliegt.

## Patentansprüche

1. Wäßrige Pulverlackdispersion, **dadurch gekennzeichnet, dass** diese 5 bis 60 Gew.-% Pulverlack und 0,2 bis 10 Gew.-% Effektpigment enthält.

2. Wäßrige Pulverlackdispersion gemäß Anspruch 1, **dadurch gekennzeichnet, dass** diese 10 bis 40 Gew.-% Pulverlack und 1 bis 8 Gew.-% Effektpigment enthält.

3. Wäßrige Pulverlackdispersion gemäß Anspruch 1 oder 2, **dadurch gekennzeichnet, dass** das Effektpigment ein plättchenförmiges Effektpigment ist.

4. Wäßrige Pulverlackdispersion gemäß Anspruch 3, **dadurch gekennzeichnet, dass** das plättchenförmige Effektpigment ein Glanzpigment ist.

5. Wäßrige Pulverlackdispersion gemäß einem der Ansprüche 1 bis 4, **dadurch gekennzeichnet, dass** diese zusätzlich lackübliche Additive, insbesondere einen oder mehrere der folgenden Hilfsstoffe "oberflächenaktive Substanzen, Verdickungsmittel, Verlaufsmittel" enthält.

6. Verfahren zur Herstellung einer wäßrigen Pulverlackdispersion gemäß einem oder mehreren der Ansprüche 1 bis 5, **dadurch gekennzeichnet, dass** Wasser, Pulverlack und Effektpigment und gegebenenfalls lackübliche Additive, insbesondere einer oder mehrere der folgenden Hilfsstoffe "oberflächenaktive Substanzen, Verdickungsmittel, Verlaufsmittel" in beliebiger Reihenfolge vermischt werden.

7. Verfahren gemäß Anspruch 6, **dadurch gekennzeichnet, daß** vor der Effektpigmentzugabe eine Feinmahlung des Pulverlacks in wässriger Dispersion erfolgt.

8. Verwendung einer wäßrigen Pulverlackdispersion gemäß einem der Ansprüche 1 bis 5 zur Beschichtung von Substraten.
